# EUROPEAN PATENT SPECIFICATION

(11) **EP 0 388 481 B1**
(45) Date of publication and mention of the grant of the patent: **15.03.1995**
(21) Application number: 89104944.7
(22) Date of filing: 20.03.1989
(51) Int. Cl.: F16J 15/30

(54) **General packing of expanded graphite and its packing material**
Dichtung aus expandiertem Graphit und ihr Dichtungsmaterial
Joint en graphite expansé et son matériau

(43) Date of publication of application: 26.09.1990
(73) Proprietor: ZHEJIANG CI XI SEAL MATERIAL FACTORY, Ci Xi County Zhejiang (CN)
(72) Inventor: Zhu, Di Xiang, Ci Xi County Zhejiang (CN)
(74) Representative: von Füner, Alexander, Dr.

(56) References cited:
- DE-A- 3 128 620
- FR-A- 2 117 540
- US-A- 3 403 595
- US-A- 4 006 881
- US-A- 4 455 334
- PATENT ABSTRACTS OF JAPAN, vol. 6, no. 93 (M-133)(971), 29 May 1982; & JP-A-57 29854 (HITACHI KASEI KOGYO K.K.) 17.02.1982
- PATENT ABSTRACTS OF JAPAN, Vol. 9, no. 192 (C-296)(1915), 8 August 1985; & JP-A-60 60174 (NICHIAS K.K.) 06.04.1985

## Description

This invention relates to a packing material for sealing against fluid media, more particularly to a general graphite packing.

A method for production of composite woven shaped packing of expanded graphite was disclosed in the Japanese patent no. 5729854. In this prior art, natural scaly graphite, newly formed graphite and heat-dissociated graphite were used as raw materials and were treated with strong acid to form interlaminar compound, washed with water, and then expanded momentarily at high temperature. The resulting expanded graphite granules were pressed into expanded shape graphite. A tubular fabric was used as reinforcing material, which had been formed by check braiding, covering braiding or sack knitted of asbestos or carbon fibers from bottom to top. The expanded shape graphite thus produced were rolled up into a cylindrical form or cut into a band with definite width, or cut into scraps or slices to fill up the cavity of the tubular fabrics, forming the composite packing. Since this kind of composite packing was completely made from derivatives of carbon, the resistance to heat, corrosion and abrasion were improved. Nevertheless, the mechanical strength of the products was not high enough to undergo flexure since the material of the fabric layer is different from that of the filling substance in the packing and the expanded graphite slices (scraps) were combined mainly by mechanical force. Furthermore, as there was no adhesion between the tubular fabric and the shape graphite, the damage to the fabric will result in failure of the packing, leading to inconvenience for application. Moreover, the durability of the products was not adequate under high pressure conditions, and its availability was not extensive.

US patent 4,455,334 refers to "a moulded gland packing, comprising a volute laminate of a composite sheet material compressed into a unified annular form of rectangular cross-section, the composite sheet material having a plurality of spirally-wound and bonded layers, each layer having an expanded graphite sheet and a reinforcing core member embedded in one side of the expanded graphite sheet, the reinforcing core being fully embedded within the cross-section of the laminate and facilitating insertion and removal of the moulded packing and improving sealing performance" (column 4, line 62 to column 5, line 5).

US patent 4,455,334 further discloses that "as the core member to be pressingly contacted with the expanded graphite sheet, various materials and structures may be suitably selected. There may be selected not only a metallic net formed by knitting a metal fine thread, such as stainless steel, copper, aluminium or iron fine thread, but also a fabric formed by weaving inorganic fibers having a predetermined strength such as ceramic, glass or carbon fibers, or an organic fabric made of phenolic resin fibers or the like" (column 3, lines 45-53).

"It is preferred to use a metallic thread having a diameter of 0.1 to 0.5 mm" (column 4, lines 13-14).

In view of this, the objective of the invention is to provide a sort of general packing of expanded graphite with high strength.

The invention relates to a packing material being made from expanded graphite, reinforcing material and organic adhesive, said reinforcing material being impregnated with said organic adhesive, each unit of said reinforcing material being wrapped by said expanded graphite material, resulting in, under pressure, a flexible and tight compound body of said packing material, said reinforcing material being embedded and adhered to within said expanded graphite material in said compound body,
characterized in that expanded graphite is a vermiform graphite, that the density of said vermiform graphite is 0.003 - 0.03 g/cm³, that the thickness of said reinforcing material is 0.02 - 0.06 mm, and that the amount of said reinforcing material is less than 10% by weight of the packing.

The process for production of the general packing of expanded graphite comprises the treatment of the graphite with strong acid to form interlaminar compound, transient expansion of treated graphite at high temperature to become vermiform and combining with the reinforcing materials to form packing. The characteristic lies in the vermiform laminae is bonded with the reinforcing materials by organic adhesives, and the reinforcing materials are embedded in the vermiform laminae of the expanded graphite.

The invention is illustrated in detail by the following examples. However, the examples are merely presented to contribute to comprehension and embodiment of the invention, not intended to confine the present invention.

### Example 1.

### Preparation of the expanded graphite strip

General packing of expanded graphite in this invention is produced by using natural scaly graphite or graphite powder as raw material, which are treated with a strong acid, such as concentrated hydrochloric acid, to form interlaminar compound, then washed with water to remove acid and dried, finally, subjected to transient expansion at high temperature to become vermiform graphite laminae. These procedures are conducted according to the known techniques in the prior art.

Besides, the surface of the reinforcing materials are impregnated with organic adhesives, such as in the manner of continuous impregnation or coated with organic adhesives which are useful for both the expanded graphite and the reinforcing materials, selected from nitrile compound, such as butyronitrile or epoxy-butyronitrile adhesive, unsaturated hydrocarbon, such as chlorobutadiene or cyano - propylene, polyester, such as polypropionate, or ethylene polyacetate, and epoxyd more preferably are one or more members of the group consisting of butyronitrile, chlorobutadiene and ethylene polyacetate. Tight adhesion of the expanded graphite to the reinforcing materials is the point regardless the ratio, i.e., the proportion of the adhesives to the auxiliary material. The reinforcing materials may be soft, linear, membranous or fabric substance selected from one or more of the following materials: organic synthetic film, glass fibers, synthetic fibers and carbon fibers in thickness of less than 0.2 mm, particularly 0.02 - 0.06 mm. It is better to use the manner of continuous impregnation for covering with the adhesive, this is, the reinforcing material, such as in shape of membrane is passed through a tank containing adhesive, then properly heated and dessicated, temperature ranges from 20 to 100°C, preferably 50 - 100°C , and more preferably 70 - 80°C.

Thereafter, the above treated reinforcing materials, such as in the shape of membrane, are embedded in the vermiform laminae of the expanded graphite, the amount of the auxiliary materials in the packing is below 10% by weight based on the total weight of the packing. In general, it is desirable to have the reinforcing materials evenly embedded in the expanded graphite laminae (i.e. the thickness or the graphite vermiform laminae adhered to both sides of the reinforcing material is identical). The density of the vermiform graphite is 0.003 - 0.03 g/cm³ depending on different applications. The next step is to go through mechanical rolling press under the pressure of 70 - 150 kg/cm² (i.e. low pressure is required for the application with large size, and high pressure for small one). The expanded graphite strip thus produced is 0.10 - 0.30 mm in thickness.

### Example 2.

### Preparation of a general packing roll of expanded graphite.

The graphite strip with expanded graphite as external surfaces and the reinforcing materials embedded in them (see example 1) is rolled up according to the known per se technique in the prior art, either in single sheet or in multisheet overlapped. One or more layers of metallic wires, such as copper, iron, tin and aluminum wires, are interpolated into the centre, the diameter of which being less than 0.10 mm, preferably 0.05 - 0.07 mm; cotton and hemp fibers less than 0.10 mm in layer can also be used. Therefore, the internal combining strength and folding endurance of the packing will be enhenced. Then, by extrusion or rolling press for shaping at the pressure of 120 - 180 kg/cm² , the general packing roll of expanded graphite in required sectional shape and size is produced.

In comparison with the packing produced by previous techniques, the above mentioned one has higher resistance to abrasion and folding, being suitable for sealing of larger sites (openings) and special sites as well.

### Example 3.

### Preparation of rope-like general packing of expanded graphite.

The expanded graphite produced according to Example 1 is cut into narrow strip 5 - 50 mm in width, preferably 20 - 30 mm, then twisted into graphite thread. One or more pieces of metallic wires selected from the group consisting of copper, iron, tin and aluminum with diameter less than 0.10 mm may be incorporated while twisting. The sectional size of the packing can be varied by using different number of pieces of thread. The graphite thread is passed through the matched mould mouth for shaping and surface processing. Thus the rope-like general packing of expanded graphite in desired length is obtained.

This kind of packing expanded graphite produced according to above method has superior flexibility, being able to be folded arbitrarily within the scope of 0 - 180° , useful for static and dynamic sealing as well as special sealing.

### Example 4.

### Preparation of braided general packing of expanded graphite

According to the process described in Example 3, the rope-like expanded graphite is produced from the expanded graphite strip obtained by the method of Example 1. The resulting rope-like graphite is hole-braided through a braiding machine, such as hole braiding machine or covering braided or multi-braided repeatedly with graphite rope incorporated within. Then after shape-finishing and surface processing, the braided general packing of expanded graphite in different sectional shapes and sizes is obtained.

The packing thus produced has high strength, stable size and can be flexed or bent arbitrarily within 0 - 180°C, useful for static and dynamic sealing of openings of various sizes, particularly effective for dynamic sealing of the fluid media with relatively high PV value (i.e. high pressure end rotating speed) or containing solid substances.

An important feature of the invention is that the external surfaces of the packing are graphite laminae and the reinforcing materials embedded in them may be very thin and even. The amount of the said expanded graphite is more than 90% by weight based on the total weight of the packing, leading to the properties of the packing close to the pure graphite products in superior resistance to high temperature, abrasion and corrosion. Furthermore, it is more superior to pure graphite products and other previous packing in strength, folding endurance; Comparing to original expanded graphite stuffing rings only 75% pretension is required to apply for sealing when setting and the doubled durability at least. On the other hand, the process can provide general packing with sectional surface in different shape, size and length, so that it can be appropriately applied to fluid static and dynamic sealing of all sizes of openings as well as special mouths. The user may take the packing product of required type and length and wind it on the site to be sealed. Satisfactory sealing can be attained just by pressure applied. This kind of sealing will be most convenient for transportation, storage and setting, and the cost in both production and application is reduced.

The above detailed descriptions of this invention will be of help in comprehension and embodiment of the invention. Obviously, various modifications and changes can be made which are all included in the scope of the Claims attached.

## Claims

1. A packing material being made from expanded graphite, reinforcing material and organic adhesive, said reinforcing material being impregnated with said organic adhesive, each unit of said reinforcing material being wrapped by said expanded graphite material, resulting in, under pressure, a flexible and tight compound body of said packing material, said reinforcing material being embedded and adhered to within said expanded graphite material in said compound body, characterized in that expanded graphite is a vermiform graphite, that the density of said vermiform graphite is 0.003 - 0.03 g/cm³, that the thickness of said reinforcing material is 0.02 - 0.06 mm, and that the amount of said reinforcing material is less than 10% by weight of the packing.

2. The packing material of claim 1, characterized in that said reinforcing material is selected from one or more members of the group consisting or organic synthetic film, glass fibers, synthetic fibers, carbon fibers and metallic wire.

3. The packing material of claims 1 or 2, characterized in that said reinforcing material is in shape of soft linear, membranous or fabric.

4. The packing material of claims 1-3, characterized in that said organic adhesive is selected from nitrile compound, unsaturated hydrocarbon, polyester or epoxyn.

5. The packing material of claim 4, characterized in that said organic adhesives are selected from one or more members of the group consisting of butyronitrile, chlorobutadiene or ethylene polyacetate.

6. A packing made of the material of claims 1-5, characterized in that said packing is a strand or braid made from threads which are twisted from at least one strip of said compound body of said reinforcing material, vermiform graphite and organic adhesive.

7. The packing of claim 6, characterized in that said strip is 5 to 50 mm in width, preferably 20-30 mm.

8. The packing of claim 7, characterized in that further one or more substances selected from the group consisting of cotton fibers, hemp fibers and wire of either copper, iron, tin or aluminium may be added into said threads for making said strand or braid.

9. The packing of claim 8, characterized in that the diameter of said copper, iron, tin or aluminium wire is below 0.10 mm, preferably 0.05-0.07 mm.

## Patentansprüche

1. Dichtungsmaterial, hergestellt aus expandiertem Graphit, einem Verstärkungsmaterial und einem organischen Klebstoff, wobei das Verstärkungsmaterial mit dem organischen Klebstoff getränkt ist, jede Einheit des Verstärkungsmaterials vom expandierten Graphit umhüllt ist, was unter Druck einen flexiblen und festen Verbundstoffkörper des Dichtungsmaterials ergibt, das Verstärkungsmaterial in den im Verbundstoffkörper enthaltenen expandierten Graphit eingebettet ist und mit diesem verklebt ist, dadurch **gekennzeichnet,** daß der expandierte Graphit Vermikulargraphit ist, dessen Dichte 0,003 bis 0,03 g/cm³ beträgt, die Dicke des Verstärkungsmaterials 0,02 bis 0,06 mm beträgt und die Menge des Verstärkungsmaterials unter 10 Gew.-% der Dichtung ausmacht.

2. Dichtungsmaterial nach Anspruch 1, dadurch **gekennzeichnet,** daß das Verstärkungsmaterial ausgewählt wird aus einem oder mehreren Vertretern der Gruppe, bestehend aus einem organischen Kunststoffilm, Glasfasern, Synthesefasern, Kohlenstoffasern und Metalldraht.

3. Dichungsmaterial nach Anspruch 1 oder 2, dadurch **gekennzeichnet,** daß das Verstärkungsmaterial weiche, lineare, membranartige oder gewebeartige Form aufweist.

4. Dichtungsmaterial gemäß den Ansprüchen 1 bis 3, dadurch **gekennzeichnet,** daß der organische Klebstoff ausgewählt wird unter einer Nitrilverbindung, einem ungesättigten Kohlenwasserstoff, Polyester oder Epoxid.

5. Dichtungsmaterial nach Anspruch 4, dadurch **gekennzeichnet,** daß die organischen Klebstoffe ausgewählt werden aus einem oder mehreren Vertretern der Gruppe, bestehend aus Butyronitril, Chlorbutadien oder Ethylenpolyacetat.

6. Eine aus dem Stoff nach einem der Ansprüche 1 bis 5 hergestellte Dichtung, dadurch **gekennzeichnet,** daß die Dichtung ein Strang oder eine Flechte ist, hergestellt aus Fäden, die aus wenigstens einem Streifen des Verbundstoffkörpers aus Verstärkungsmaterial, Vermikulargraphit und organischem Klebstoff verdreht sind.

7. Dichtung nach Anspruch 6, dadurch **gekennzeichnet,** daß der Streifen 5 bis 50 mm und vorzugsweise 20 bis 30 mm breit ist.

8. Dichtung nach Anspruch 7, dadurch **gekennzeichnet,** daß ferner den Fäden zur Herstellung des Stranges bzw. der Flechte ein oder mehrere Stoffe, ausgewählt aus der Gruppe, bestehend aus Baumwollfasern, Hanffasern und Draht aus Kupfer, Eisen, Zinn oder Aluminium zugesetzt werden können.

9. Dichtung nach Anspruch 8, dadurch **gekennzeichnet,** daß der Durchmesser des Kupfer-, Eisen-, Zinn- oder Aluminiumdrahts unter 0,10 mm liegt und vorzugsweise 0,05 bis 0,07 mm beträgt.

## Revendications

1. Matériau de joint réalisé à partir de graphite expansé, de matériau de renfort et d'adhésif organique, ledit matériau de renfort étant imprégné avec ledit adhésif organique, chaque unité dudit matériau de renfort étant drapé avec ledit matériau de graphite expansé, permettant d'obtenir, sous pression, un corps composite flexible et compact de dit matériau de joint, ledit matériau de renfort étant enrobé et collé audit matériau de graphite expansé dans ledit corps composite, ***caractérisé en ce que*** le graphite expansé est un graphite vermiculaire**, *en ce que*** la densité dudit graphite vermiculaire est de 0,003 à 0,03 g/cm³, ***en ce que*** l'épaisseur dudit matériau de renfort est de 0,02 à 0,06 mm et ***en ce que*** la quantité de dit matériau de renfort est inférieure à 10 % en poids du joint.

2. Matériau de joint selon la Revendication 1, ***caractérisé en ce que*** ledit matériau de renfort est choisi parmi un ou plusieurs membres du groupe composé de film synthétique organique, de fibres de verte, de fibres synthétiques, de fibres de carbone et de fil métallique.

3. Matériau de joint selon la Revendication 1 ou 2, ***caractérisé en ce que*** ledit matériau de renfort est sous forme linéaire molle, membraneuse ou de tissu.

4. Matériau de joint selon les Revendications 1 à 3, ***caractérisé en ce que*** ledit adhésif organique est choisi parmi : composé nitrile, hydrocarbure insaturé, polyester ou époxydes.

5. Matériau de joint selon la Revendication 4, ***caractérisé en ce que*** lesdits adhésifs organiques sont choisis parmi un ou plusieurs membres du groupe composé du butyronitrile, du chlorobutadiène ou du polyacétate d'éthylène.

6. Joint réalisé dans le matériau des Revendications 1 à 5, ***caractérisé en ce que*** ledit joint est un toron ou une tresse réalisé à partir de fils qui sont tordus à partir d'au moins une bande dudit corps composite de matériau de renfort, de graphite vermiculaire et d'adhésif organique.

7. Joint selon la Revendication 6, ***caractérisé en ce que*** ladite bande est d'une largeur de 5 à 50 mm, et préférablement de 20 à 30 mm.

8. Joint selon la Revendication 7, ***caractérisé en ce que*** additionnellement une ou plusieurs substances choisies dans le groupe composé des fibres de coton, fibres de chanvre et fil métallique soit de cuivre, soit de fer, soit d'étain, soit d'aluminium, peuvent être ajoutés dans lesdits fils pour réaliser ledit toron ou tresse.

9. Joint selon la Revendication 8, ***caractérisé en ce que*** le diamètre desdits fils de cuivre, de fer, d'étain ou d'aluminium est inférieur à 0,10 mm, et de préférence 0,05 à 0,07 mm.
